# EUROPEAN PATENT APPLICATION

(11) **EP 1 700 523 A1**
(43) Date of publication of application: **13.09.2006**
(21) Application number: 06075608.7
(22) Date of filing: 13.03.2006
(51) Int. Cl.: A21C 13/00

(54) **Bag for accomodating a mass of dough able to rise**

(30) Priority: 11.03.2005 NL 1028524
(71) Applicant: Tega Holding B.V., 7552 VZ Hengelo (NL)
(72) Inventor: Boone, Marinus Wilhelmus, 7552 VZ Hengelo (NL)
(74) Representative: Schumann, Bernard Herman Johan

(57) **Abstract**

The invention relates to a bag for accommodating a portioned mass of non-risen dough which is able to rise, for instance bread dough, which mass must rise at a determined temperature and for a determined time in a rising cabinet, the or each surface of which bag that can come into contact with dough consists of polytetrafluoroethylene (PTFE).

According to the invention said surface has a fibrous character. Surprisingly, this achieves that the dough does not adhere to such a surface.

## Description

The invention relates to a bag for accommodating a portioned mass of non-risen dough which is able to rise, for instance bread dough, which mass must rise at a determined temperature and for a determined time in a rising cabinet, the or each surface of which bag that can come into contact with dough consists of polytetrafluoroethylene (PTFE).

Such a bag is known from BE-A-1 014 682. It has been found that the adhesion of the dough to surfaces consisting of PTFE as according to this known art is not negligible. This is undesirable in respect of the food and hygiene standards required of such bags.

The invention has for its object to embody a rising bag such that the dough to be accommodated in the bag has no, or only a wholly negligible, tendency to adhere to the PTFE surface.

In respect of this objective the bag according to the invention has the feature that said surface has a fibrous character. It is surprising to note that, other than would be expected, it is not a smooth surface but on the contrary a fibrous surface which gives the desired result.

It is noted that the stated Belgian specification describes that the bag in question is embodied with a fibre-reinforced wall. It is not stated what the material of these fibres is, and attention is also drawn to the fact that the fibrous nature of the surface according to the teaching of the invention bears no relation to a fibre reinforcement as according to this German specification.

Other known bags consist of cotton, wool felt or polyethylene wire mesh. The known bags of these materials have the advantage that the dough does not adhere thereto, or only a little, and that they provide sufficient air permeability, although they do have the drawback that dough particles remain behind therein. This results in contamination and, after a short period of time, to fungal growth. After being used the bag must be cleaned prior to reuse. A problem here is that the washability of these known bags leaves something to be desired.

In a specific embodiment the bag according to the invention has the feature that the bag comprises at least a carrier layer and a layer consisting of PTFE connected thereto.

The bag according to this latter embodiment can further have the special feature that the carrier layer consists of PTFE. Such a bag, which can for instance consist entirely of PTFE, displays superior technical qualities. It has the general advantage of a bag according to the invention that dough has only a negligible tendency to adhere to the inner surface of the bag. In addition, the bag can, if desired, be disinfected and cleaned at high temperature. This is because PTFE is a material which can withstand a temperature in the order of 250°C without any form of degradation. PTFE is further a material which is not conducive to the growth of fungi, bacteria and other organisms that are undesirable in respect of the properties which a bag according to the invention must possess. PTFE is further a material which is very inert and for this reason also highly suitable for chemical cleaning.

The excellent temperature resistance of a bag according to the invention consisting wholly of PTFE provides yet another very interesting option which is not provided by a prior art bag. It is usual in a bakery to empty a bag in which a portioned quantity of dough has risen by transferring the risen dough into a mould or container which usually consists of metal and in which the dough is placed in an oven and kept there for a certain period of time until the product in question is ready except for the necessary cooling. A PTFE bag according to the invention provides the option, in contrast to the prior art, of not removing the risen dough mass from the bag but leaving it therein and placing the bag with the risen dough present therein into the baking oven. It is even possible to envisage the rising of the dough mass in question and baking thereof in the oven being carried out in one uninterrupted continuous process. It is possible to consider modelling a bag intended for this purpose such that within a certain tolerance a baked product meets the standards required for the external form of the finished product.

The bag according to the invention is preferably embodied such that the bag comprises a layer of needle felt, comprising a carrier to which the PTFE fibres protruding from the or each relevant surface are connected by means of a stitch-through process. The stitching-through of for instance a non-woven cloth consisting of PTFE, with a carrier which is preferably embodied as a textile cloth, has the advantage that the fibrous character on the inner side of the bag is obtained in a very simple manner, while the two layers are moreover connected non-releasably to each other over this whole surface in a per se known and controlled manner.

As set forth above, the carrier can also consist of PTFE, which results in the described technical advantages.

A drawback of this aspect of the invention is that PTFE is a relatively expensive material, and that a bag embodied in this manner is therefore expensive.

The bag can advantageously also be manufactured in less expensive manner while retaining at least a number of technical qualities. This relates particularly to the choice of material for the carrier. A less expensive embodiment of the bag has the special feature that the carrier consists of a material other than PTFE, for instance polyester or polyethylene (PE). It must however be taken into account that polyester and polyethylene do not have the same technical high-quality character as PTFE. Particularly their temperature resistance and their chemical resistance are less than that of PTFE.

As described above, the fibrous character desired according to the invention of each surface that can come into contact with dough can be realized by mechanically coupling a layer consisting of PTFE fibres to a carrier by means of a stitch-through process, whereby the PTFE fibres protrude on the desired side.

Alternatively it is possible to envisage an embodiment in which the fibrous character of the or each surface that can come into contact with dough is brought about by a roughening process.

Such a bag according to the invention is preferably embodied such that the relevant surface forms part of a fabric consisting of endless PTFE yarns, which yarns are subjected to a texturing process prior to making of the fabric. Other than in for instance felt-like or stitched-through structures, the endless yarns of which the fabric consists have a strong fixation in the fabric and do not therefore tend to come loose. In the stated stitched-through or felt-like structures a fibre is connected on one side to the carrier layer and the protruding end can be pulled loose from the bag when the dough is removed. While this is not harmful to health, because PTFE is after all a wholly inert material, it is nevertheless deemed undesirable from general considerations of quality.

The yarns can be multifilament yarns. The surface of these yarns can be roughened by a per se known texturing process carried out in advance.

The carrier can be structured in any desired and technically acceptable manner. At the moment of conception of this patent application the inventor gives preference to an embodiment in which the carrier comprises a textile layer. It is however also possible to envisage a non-woven cloth, the filaments of which are fixed to at least some extent at their junctions by means of a process with a certain temperature increase and optionally a certain pressure, such as a calendering process.

## Claims

1. Bag for accommodating a portioned mass of non-risen dough which is able to rise, for instance bread dough, which mass must rise at a determined temperature and for a determined time in a rising cabinet, the or each surface of which bag that can come into contact with dough consists of polytetrafluoroethylene (PTFE),
**characterized in that**
said surface has a fibrous character.

2. Bag as claimed in claim 1,
**characterized in that**
the bag comprises at least a carrier layer and a layer consisting of PTFE connected thereto.

3. Bag as claimed in claim 2,
**characterized in that**
the carrier layer consists of PTFE.

4. Bag as claimed in claim 2,
**characterized in that**
the bag comprises a layer of needle felt, comprising a carrier to which the PTFE fibres protruding from the or each relevant surface are connected by means of a stitch-through process.

5. Bag as claimed in claim 2,
**characterized in that**
the carrier consists of a material other than PTFE, for instance polyester or polyethylene (PE).

6. Bag as claimed in claim 1,
**characterized in that**
the fibrous character of the or each surface that can come into contact with dough is brought about by a roughening process.

7. Bag as claimed in claim 6,
**characterized in that**
the relevant surface forms part of a fabric consisting of endless PTFE yarns, which yarns are subjected to a texturing process prior to making of the fabric.

8. Bag as claimed in claim 1,
**characterized in that**
the carrier comprises a textile layer.
